# EUROPEAN PATENT APPLICATION

(11) **EP 4 708 514 A1**
(43) Date of publication of application: **11.03.2026**
(21) Application number: 24199293.2
(22) Date of filing: 09.09.2024
(51) Int. Cl.: H01M 50/249, H01M 50/342, H01M 50/30

(54) **DEGASSING VENT ASSEMBLY FOR A BATTERY PACK OF A VEHICLE, BATTERY PACK FOR A VEHICLE, METHOD FOR MOUNTING A DEGASSING VENT ASSEMBLY ON A BATTERY PACK FOR A VEHICLE, AND VEHICLE**

(71) Applicant: Volvo Car Corporation, 405 31 Göteborg (SE)
(72) Inventor: WERBERG, Leopold, 40531 Göteborg (SE); MYSORE, Nandeep, 40531 Göteborg (SE); PERSSON, Klas, 40531 Göteborg (SE)
(74) Representative: Maiwald GmbH

(57) **Abstract**

The disclosure relates to a degassing vent assembly (18) for a battery pack (12) of a vehicle. The degassing vent assembly (18) comprises a protection sheet (24), a support wall (26), and a holding member (30). The protection sheet (24) is configured for covering a vent (16) of the battery pack (12). The support wall (26) comprises at least one opening (28). The protection sheet (24) covers the at least one opening (28). The holding member (30) is configured for holding the protection sheet (24) against the support wall (26). The holding member (30) and the protection sheet (24) are arranged on opposite sides of the protection sheet (24). Additionally, a battery pack (12) for a vehicle is described. Furthermore, a method for mounting a degassing vent assembly (18) on a battery pack (12) for a vehicle is shown. Also, a vehicle is described.

## Description

### TECHNICAL FIELD

The present disclosure relates to a degassing vent assembly for a battery pack of a vehicle.

Moreover, the present disclosure is directed to a battery pack for a vehicle.

Additionally, the present disclosure relates to a method for mounting a degassing vent assembly on a battery pack for a vehicle.

Furthermore, the present disclosure is directed to a vehicle.

### BACKGROUND ART

The ongoing development in the field of battery electric vehicles show that higher energy densities in battery packs are achieved by using more aggressive cell chemistries. More aggressive cell chemistries increase the risk of thermal events occurring in the battery pack, which may damage the overall battery system. Thus, there is a need to increase safety of such battery packs in case of thermal events.

Further, in order to allow for reliable and long operation, the battery pack shall be protected from external substances.

Current solutions often show that these requirements lead to rather complex and voluminous battery packs. This also results in cost-intensive manufacturing of such battery packs.

### SUMMARY

It is therefore an objective of the present disclosure to reduce the complexity and the size of a battery pack while providing enhanced safety.

The problem is at least partially solved or alleviated by the subject matter of the SE:TOP independent claims of the present disclosure, wherein further examples are incorporated in the dependent claims.

According to a first aspect, there is provided a degassing vent assembly for a battery pack of a vehicle. The degassing vent assembly comprises a protection sheet, a support wall, and a holding member. The protection sheet is configured for covering a vent of the battery pack. The support wall comprises at least one opening. The protection sheet covers the at least one opening of the support wall. The holding member is configured for holding the protection sheet against the support wall. The holding member and the protection sheet are arranged on opposite sides of the protection sheet. The degassing vent assembly may be understood as a cover assembly for a battery pack. Thus, the degassing vent assembly may be configured to close or cover a battery pack to avoid entering of external substances into an interior of the battery pack. Such external substances may be gas, liquids, e.g. water, and/or particles. This functionality is especially provided by the protection sheet providing the actual protection and the support wall supporting the protection sheet. Since the protection sheet covers the at least one opening of the support wall, the combination of the support wall and the protection sheet may resist comparatively high pressures. In an example, the protection sheet lies flat against the support wall. The degassing vent assembly may be configured to selectively open or uncover the vent of the battery pack for releasing gases and particles occurring inside the battery pack in case of a thermal event. In case of such thermal events, internal pressure or forces originating from the interior of the battery pack are acting on the degassing vent assembly. Opening or uncovering the vent of the battery pack may involve rupturing at least a portion of the protection sheet. Altogether, in case the degassing vent assembly is used on the battery pack, an interior of the battery pack is sealed from an exterior of the battery pack. Additionally, the interior of the battery pack may be fluidically connected to the exterior of the battery pack in case an internal pressure or force in the interior exceeds a predefined internal pressure threshold or force threshold. In this context, an increase of the internal pressure in the interior may be caused by the thermal event occurring in the battery pack. The support wall comprising at least one opening means that the gases and/or particles resulting from the thermal event may pass through the at least one opening. In other words, the support wall may be configured to withstand the internal pressure in the battery pack in case the internal pressure exceeds the predefined internal pressure threshold. Altogether, due to the fact that the protection sheet covers the at least one opening of the support wall, the protection sheet and the support wall are configured to withstand high pressure occurring on a side adjacent to the protection sheet. This is due to the fact that the protection sheet is supported by the support wall. If high pressure occurs adjacent to the support wall, the protection sheet may break or rupture and, thereby, allow for pressure relief. In an example, the protection sheet lies flat against the support wall. This means that no space is formed between the protection sheet and the support wall. This has the effect that the complexity and the size of the degassing vent assembly may be small while providing enhanced safety.

In the context of the present disclosure, the battery pack may be part of a traction battery of the vehicle. This means that energy stored in the battery pack may be used for driving the vehicle. Therefore, the degassing vent assembly may be a component for a traction battery of the vehicle.

In an example, the holding member comprises an opening. The opening extends over an area of the holding member such that when the holding member is used to hold the protection sheet against the support wall, at least 50 percent of the protection sheet's surface faces the opening. In another example, at least 60 percent of the protection sheet's surface faces the opening. In a further example, at least 70 percent of the protection sheet's surface faces the opening. In still another example, at least 80 percent of the protection sheet's surface faces the opening. In this context, the holding member may be a frame surrounding the opening. Thus, the holding member may cover portions of the protection sheet adjacent to the edges of the protection sheet. This has the effect that in case the internal pressure in the interior increases, the protection sheet may bulge through or into the opening of the holding member. This means that the protection sheet may bulge before breaking. Thus, the safety of the battery pack equipped with such a degassing vent assembly is further improved. Moreover, in case the internal pressure in the interior exceeds the predefined internal pressure threshold, the protection sheet may break or rupture through the opening without further damaging the holding member.

According to an example, the protection sheet is a membrane or a foil. Thus, the protection sheet may be flexible and may be very thin. The protection sheet may have a thickness of less than 2 mm, or less than 1 mm. The thickness may depend on a pressure level at which the material is configured to rupture. In any case, using a foil or membrane allows to precisely configure the protection sheet to the pressure at which it shall rupture. In an example, the protection sheet is made of a plastic material or a polymer material. In another example, the protection sheet is made of a metal material. Further, using a membrane or foil is space-saving. d.

According to an example, the protection sheet is impermeable for liquids. This means that liquids may not pass through the protection sheet. This has the effect that a battery pack equipped with the degassing vent assembly may be reliably protected from liquids originating from the environment. This may be helpful, when the vehicle drives through heavy rain, through a puddle of water or any other situation in which the vehicle is exposed to water. In more detail, the liquid may apply an external pressure on the protection sheet. The protection sheet may be configured to withstand this pressure due to the support provided by the support wall. This has the effect that the durability and the safety of the battery pack equipped with such a degassing vent assembly is further enhanced.

According to an example, the protection sheet is gas-permeable. This means that gases may pass through the protection sheet, at least to a certain extent. The protection sheet may be configured to withstand a predefined internal pressure in the interior of the battery pack caused by the thermal event occurring in the battery pack. In other words, the protection sheet may withstand the internal pressure, in case the internal pressure is lower than the predefined internal pressure threshold. The protection sheet may be configured to break or rupture, in case the internal pressure or force in the interior exceeds the predefined internal pressure threshold. Thus, using a gas-permeable protection sheet may allow gases that are generated inside a battery pack during normal operation, i.e. not during thermal events, to be exhausted to the environment of the battery pack. In such a case the protection sheet is not ruptured. Thus, the lifetime of the battery pack equipped with such a degassing vent assembly is further enhanced.

According to an example, the support wall comprises a plurality of openings. Additionally, the protection sheet covers the plurality of openings. A support wall comprising a plurality of openings may also be called a mesh or a grid. The plurality of openings may be configured to let pass gases and liquids. In other words, the plurality of openings have a dimension and a form such that gases and particle may pass through the support wall in case of a thermal event. Moreover, the portions of the support wall which are arranged outside the plurality of openings, e.g. between the openings, are configured for supporting the protection sheet. This has the effect that the protection sheet may be reliably supported and, thus, durability and safety of the degassing vent assembly is further enhanced.

In an example, the plurality of openings are arranged on the support wall following a regular pattern. Thus, also the portions of the support wall which are configured for supporting the protection sheet are arranged following a regular pattern. This leads to a particularly reliable support of the protection sheet since force peaks or pressure peaks acting on the protection sheet are reduced or avoided. This has the effect, that the lifetime of the battery pack equipped with such a degassing vent assembly may be further enhanced.

According to an example, the support wall comprises a metal material. Additionally or alternatively, the holding member comprises a metal material. Such a material is comparatively robust. This also applies in an environment of comparatively high temperature. Thus, the durability and the safety of the battery pack equipped with such a degassing vent assembly is further enhanced.

According to an example, at least the protection sheet and the holding member are mechanically connected using at least one mounting element. This means that a relative movement between the protection sheet and the holding member is blocked. In other words, the protection sheet and the holding member may not move relative to each other in case the internal pressure or the external pressure is applied either to the protection sheet or to the holding member. This has the effect that the durability and the safety of the battery pack equipped with such a degassing vent assembly is further enhanced.

In an example, the at least one mounting element is at least one screw and/or at least one bolt.

According to a second aspect, there is provided a battery pack for a vehicle. The battery pack comprises an enclosure for one or more battery cells. The enclosure comprises a vent for discharging gas and/or particles in case of a thermal event. The battery pack further comprises a degassing vent assembly according to the first aspect. The degassing vent assembly is arranged on the enclosure such that the degassing vent assembly covers the vent of the enclosure. In an example, the degassing vent assembly is mechanically connected to the enclosure. Thus, as has been explained before, the degassing vent assembly may be configured to avoid entering of external substances into an interior of the battery pack. Such external substances may be gas, liquids, e.g. water, and/or particles. Moreover, the degassing vent assembly may be configured to open or uncover the vent of the enclosure for releasing gas and/or particles from the inside of the battery pack in case of a thermal event. Therefore, in case the degassing vent assembly is used in a battery pack, an interior of the battery pack is sealed from an exterior of the battery pack. However, the interior of the battery pack may be fluidically connected to the exterior of the battery pack in case an internal pressure or force in the interior exceeds a predefined internal pressure threshold. In this context, an increase of the internal pressure in the interior may be caused by the thermal event occurring in the battery pack. The protection sheet may be configured to break or rupture, in case the internal pressure in the interior exceeds the predefined internal pressure threshold. The support wall comprising at least one opening means that the cell chemistries may pass through the at least one opening in case of the thermal event. In an example, the protection sheet lies flat against the support wall. This means that no space is formed between the protection sheet and the support wall. This has the effect that the complexity and the size of a battery pack equipped with such a degassing vent assembly may be small while providing enhanced safety.

In an example, the battery pack further comprises one or more battery cells arranged in the enclosure. In more detail, the thermal event may originate from one or more than one battery cell such that gas and/or particles is released from one or more than one battery cell into the enclosure of the battery pack.

According to an example, the degassing vent assembly is mechanically connected to the enclosure using a clipping mechanism, at least one screw and/or at least one bolt. The clipping mechanism may comprise one or more clips. By using one or more of a clipping mechanism, a screw and/or a bolt, the degassing vent assembly may be reliably connected to the enclosure.

In an example, the same at least one mounting element, e.g. a clipping mechanism, at least one screw and/or at least one bolt, is used for mechanically connecting the protection sheet to the holding member and for mechanically connecting the protection sheet and the holding member to the enclosure. This has the effect that the complexity and the size of a battery pack equipped with such a degassing vent assembly may be reduced while providing enhanced safety.

According to an example, the protection sheet seals the vent of the enclosure in a liquid-tight manner. In other words, the protection sheet is used to prevent that liquids enter or exit the enclosure. Thus, the lifetime and the safety of the battery pack may be enhanced.

According to an example, the support wall is arranged closer to the enclosure than the holding member. This means that in case of a thermal event in the enclosure, the internal pressure acts on the protection sheet from the same side on which the support wall is arranged. Consequently, the support sheet may rupture if the internal pressure exceeds a predefined internal pressure. In case external pressure acts on the enclosure, this external pressure abuts the protection sheet against the support wall. This means that the mechanical stability of the battery pack against external pressure is enhanced.

In an example, the protection sheet is arranged closer to the enclosure than the holding member. Thus, the protection sheet may be arranged between the holding member and the enclosure. Moreover, it is possible that the protection sheet is arranged between the holding member and the support wall. Thus, the protection sheet is held in a reliable manner.

According to a third aspect, there is provided a method for mounting a degassing vent assembly of the first aspect on a battery pack for a vehicle. The method comprises:
- providing an enclosure of the battery pack, wherein the enclosure is for one or more battery cells, and wherein the enclosure comprises a vent for discharging gas and/or particles in case of a thermal event,
- mechanically connecting the support wall of the degassing vent assembly to the enclosure such that the support wall covers the vent of the enclosure, and subsequently mechanically connecting the protection sheet and the holding member to the enclosure such that the protection sheet covers the vent of the enclosure.

In other words, the support wall is mechanically connected to the enclosure before the protection sheet and the holding member are mechanically connected to the enclosure. Thus, the support wall is firmly mounted to the enclosure before the protection sheet and the holding member are mounted on the enclosure. This simplifies positioning and mounting of the protection sheet and the holding member. Altogether, the degassing vent assembly may be mounted on the battery pack in a reliable and efficient manner.

According to an example, the method further comprises mechanically connecting the protection sheet and the holding member before mechanically connecting the protection sheet and the holding member to the enclosure. In other words, the protection sheet and the holding member form a pre-assembled unit. This pre-assembled unit is generated first and the pre-assembled unit is mounted to the enclosure thereafter. This has the effect mechanically connecting the protection sheet and the holding member to the enclosure is facilitated and reliable.

According to an example, the method further comprises using the same at least one mounting element for mechanically connecting the protection sheet and the holding member and for mechanically connecting the protection sheet and the holding member to the enclosure. In other words, the protection sheet and the holding member are mechanically connected to the enclosure using the same at least one mounting element that already mechanically connects the protection sheet to the holding member. This has the effect that fewer mounting elements are needed to mount the degassing vent assembly on the battery pack. Thus, the complexity and the size of a battery pack equipped with such a degassing vent assembly may be reduced while providing enhanced safety.

According to a fourth aspect, there is provided a vehicle. The vehicle comprises a degassing vent assembly according to the first aspect. Additionally or alternatively, the vehicle comprises a battery pack according to the second aspect. As has been explained before, the battery pack equipped with the degassing vent assembly according to the present disclosure has the effect that the complexity and the size of the battery pack may be reduced while providing enhanced safety.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure having a battery pack according to the present disclosure comprising a degassing vent assembly according to the present disclosure, wherein the degassing vent assembly is mounted on the battery pack using a method according to the present disclosure,
- Figure 2: schematically shows the battery pack of Figure 1 in a more detailed view,
- Figure 3: shows a detail III of the battery pack of Figure 2,
- Figure 4: shows the degassing vent assembly of Figure 3 as seen from a perspective IV,
- Figure 5: shows the battery pack and the degassing vent assembly in a view corresponding to Figure 3, wherein the battery pack and the degassing vent assembly are subject to an external pressure,
- Figure 6: shows the battery pack and the degassing vent assembly in a view corresponding to Figure 3, wherein the battery pack and the degassing vent assembly are subject to an internal pressure, wherein the internal pressure is comparatively low,
- Figure 7: schematically shows a portion of the degassing vent assembly of Figure 6, wherein the internal pressure has been increased as compared to the situation of Figure 6,
- Figure 8: schematically shows a portion of the degassing vent assembly of Figure 6 in a view corresponding to Figure 7, wherein the internal pressure has been further increased as compared to the situation of Figure 7 such that the protection sheet of the degassing vent assembly is in a ruptured state,
- Figure 9: illustrates steps of the method according to the present disclosure for mounting a degassing vent assembly on a battery pack for a vehicle, and
- Figure 10: shows a portion of the degassing vent assembly in a preassembled state during execution of the method according to the present disclosure.

### DETAILED DESCRIPTION

The Figures are merely schematic representations and serve only to illustrate examples of the disclosure. Identical or equivalent elements are in principle provided with the same reference signs.

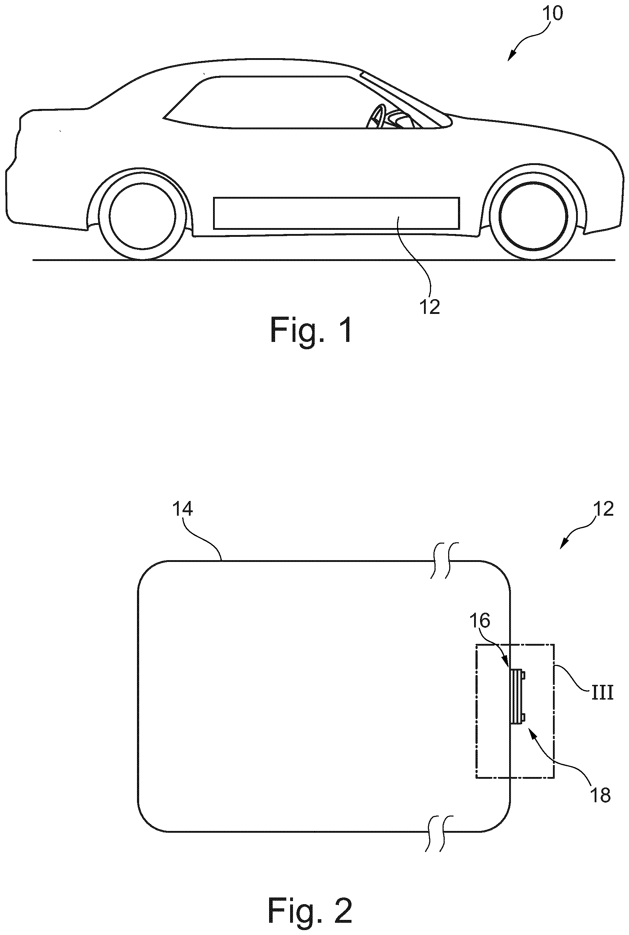

Figure 1 shows a vehicle 10 that comprises a battery pack 12. The battery pack 12 is included in a drive unit. This means that the battery pack 12 is part of a traction battery of the vehicle 10. Thus, the energy stored in the battery pack 12 may be used for driving the vehicle 10. Therefore, in the present example, the vehicle 10 is a battery electric vehicle.

The battery pack 12 comprises an enclosure 14 (see Figure 2). In the present example, a plurality of battery cells (not shown) are arranged in the enclosure 14.

The enclosure 14 comprises a vent 16. The vent 16 is used for discharging gas and/or particles in case of a thermal event in one or more of the battery cells arranged inside the enclosure 14.

The battery pack 12 further comprises a degassing vent assembly 18.

The degassing vent assembly 18 is mechanically connected to the enclosure 14 such that the degassing vent assembly 18 covers the vent 16 of the enclosure 14.

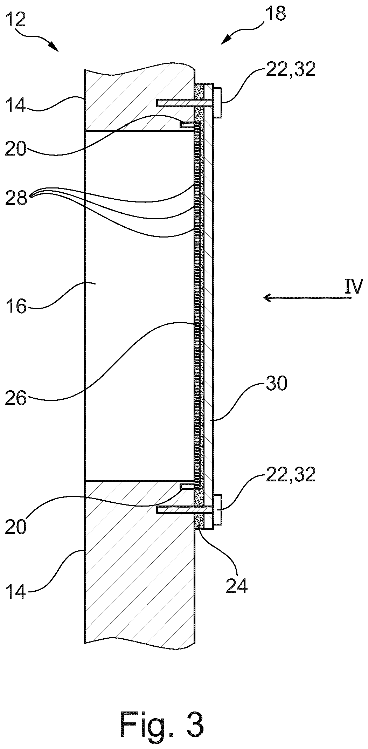

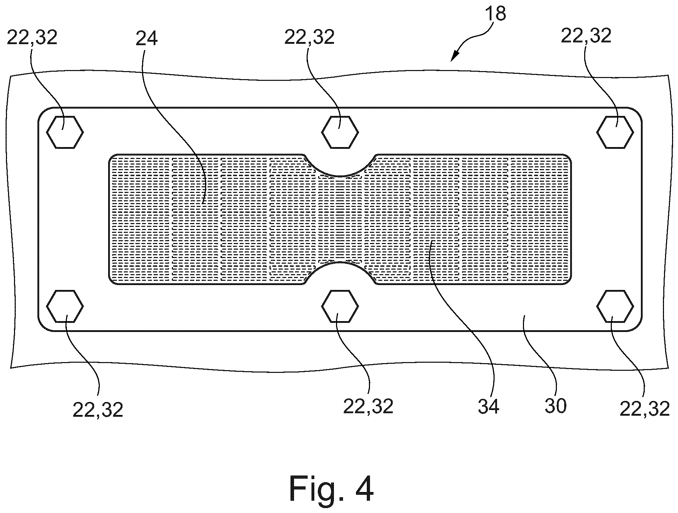

More precisely, the degassing vent assembly 18 is mechanically connected to the enclosure 14 using a clipping mechanism 20 and a total of six threaded bolts 22 (see Figures 3 and 4). The clipping mechanism 20 comprises a number of retainer tabs which are arranged in associated openings.

The degassing vent assembly 18 comprises a protection sheet 24. The protection sheet 24 is configured to cover the vent 16 of the battery pack 12. In other words, the protection sheet 24 is located on the enclosure 14 such that the vent 16 of the battery pack 12 is covered by the protection sheet 24.

The protection sheet 24 seals the vent 16 of the enclosure 14. In more detail, the protection sheet 24 seals the vent 16 of the enclosure 14 in a liquid-tight manner. Thus, the protection sheet 24 is impermeable for liquids. This means that liquids cannot pass through the protection sheet 24.

In the present example, the protection sheet 24 is a membrane.

In another example, the protection sheet 24 is a foil.

Further, the protection sheet 24 is gas-permeable to a certain extent. This means that gases can migrate through the protection sheet 24.

The degassing vent assembly 18 further comprises a support wall 26.

In the present example, the support wall 26 is a plate-shaped part which comprises a plurality of openings 28. Thus, the support wall 26 may as well be called a grid or mesh or lattice.

The support wall 26 comprises a metal material to achieve a high mechanical strength and robustness of the support wall 26.

In the present example, the protection sheet 24 lies flat against the support wall 26 and covers the plurality of openings 28 of the support wall 26 (cf. Figure 3).

The degassing vent assembly 18 further comprises a holding member 30. The holding member 30 is configured to hold the protection sheet 24 against the support wall 26. In other words, the holding member 30 lies flat against the protection sheet 24 such that the protection sheet 24 is fixed to the support wall 26.

In the present example, the holding member 30 is a frame-shaped part made from a metal material to achieve a high mechanical strength and robustness of the holding member 30. The inner void portion of the frame-shaped part may be referred to as an opening (see Figure 4).

The holding member 30 and the protection sheet 24 are arranged on opposite sides of the protection sheet 24.

Further, the holding member 30 and the protection sheet 24 are mechanically connected using mounting elements 32.

In the present example, the mounting elements 32 are formed by the same bolts 22 that mechanically connect the degassing vent assembly 18 to the enclosure 14 of the battery pack 12.

Furthermore, the degassing vent assembly 18 is mounted on the enclosure 14 such that the support wall 26 is arranged closer to the enclosure 14 than the holding member 30. In other words, the support wall 26 is arranged on the enclosure 14, the protection sheet 24 is arranged on the support wall 26 and the holding member 30 is arranged on the protection sheet 24. This means that the holding member 30 is located further away from the enclosure 14 than the support wall 26. Moreover, the holding member 30 is also located further away from the enclosure 14 than the protection sheet 24.

When using the battery pack 12 and the degassing vent assembly 18, there can be different scenarios that may occur.

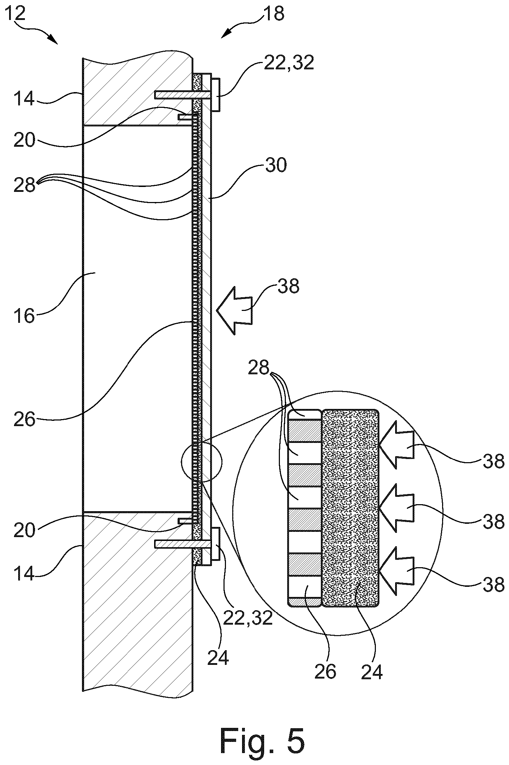

The first scenario relates to a case, in which external pressure 38 is applied to the battery pack 12 and the degassing vent assembly 18. Figure 5 depicts this scenario, wherein the external pressure 38 is represented by arrows. This may occur, when the vehicle 10 travels through heavy rain, through a puddle of water or any other situation in which the vehicle 10 is exposed to large amounts of water.

In more detail, the external pressure 38 is applied to the degassing vent assembly 18. Yet in more detail and in the present example, external pressure 38 is applied to the protection sheet 24 thereby pushing the protection sheet 24 against the support wall 26 (see also detail view in Figure 5).

Due to the support provided by the support wall 26, the protection sheet 24 can withstand such external pressure 38.

Further, no liquid enters the battery pack 12 because of the protection sheet 24 sealing the vent 16 of the enclosure 14 in a liquid-tight manner and the protection sheet 24 being impermeable for liquids.

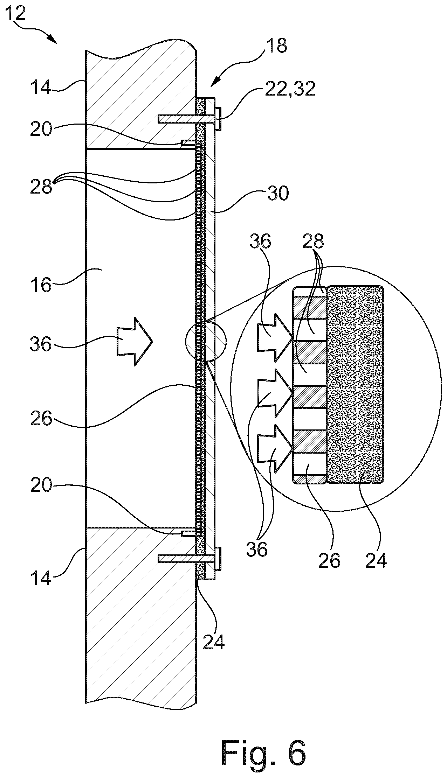

A second scenario relates to a case, in which internal pressure 36 is applied to the battery pack 12, more precisely to the degassing vent assembly 18. Figure 6 depicts such a scenario, wherein the internal pressure 36 is represented by arrows. In the second scenario, this internal pressure is comparatively low and may occur during normal operation of the battery pack 12.

As has been mentioned before, the protection sheet 24 has a certain gas-permeability. In the present scenario, the internal pressure 36 may be relieved due to the fact that gas is discharged to the environment through the protection sheet 24.

The protection sheet 24 is configured to withstand the internal pressure 36 in the second scenario. In other words, the protection sheet 24 withstands the internal pressure 36, if the internal pressure 36 does not exceed a predefined internal pressure threshold.

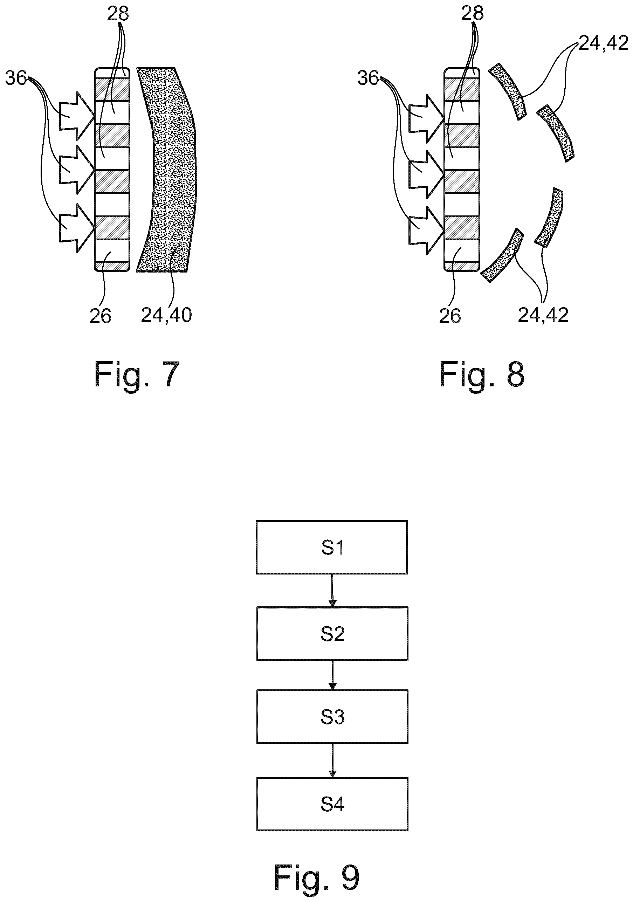

In a third scenario, the internal pressure 36 may be higher than in the second scenario, but still lower than the predefined internal pressure threshold. The third scenario is illustrated in Figure 7 wherein for the ease of explanation only the support wall 26 and the protection sheet 24 are shown.

Due to the elevated internal pressure 36 the protection sheet 24 is in a slightly bent state 40. More precisely, the protection sheet 24 bulges towards an outside of the battery pack 12.

A fourth scenario is shown in Figure 8. In this scenario, the internal pressure 36 is further increased as compared to the third scenario such that the internal pressure 36 is higher than the predefined internal pressure threshold. Such a high internal pressure 36 may occur due to a thermal event inside the enclosure 14.

Thus, in the fourth scenario, the protection sheet 24 breaks or ruptures due to the fact that the internal pressure 36 exceeds the predefined internal pressure threshold.

In order to illustrate the ruptured state 42, the protection sheet 24 is represented as a number of protection sheet parts in Figure 8 In this case, the vent 16 is uncovered or opened and the internal pressure 36 can be mitigated by exhausting gas and/or particles to the exterior.

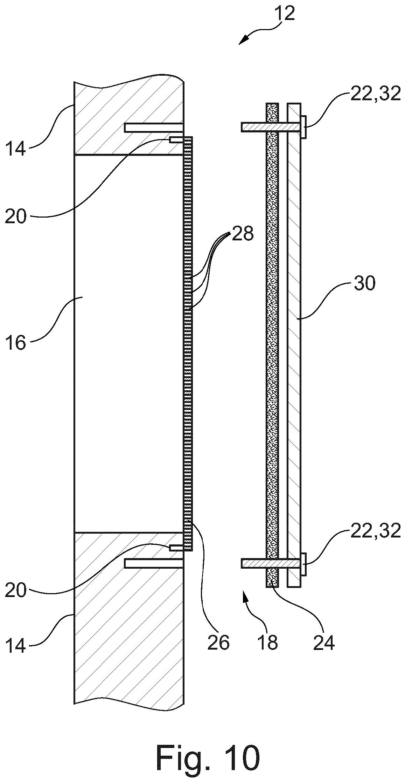

The degassing vent assembly 18 may be mounted on the battery pack 12 for the vehicle 10 in accordance with the following method (see Figures 9 and 10).

In a first step S1 of the method, the enclosure 14 of the battery pack 12 is provided. The enclosure 14 is for one or more battery cells, which are located in the enclosure 14.

In a second step S2 of the method, the protection sheet 24 and the holding member 30 are mechanically connected. This means that the protection sheet 24 and the holding member 30 form a sub-assembly.

In the present example, the protection sheet 24 and the holding member 30 are mechanically connected using the six bolts 22 (see Figure 10) as explained above.

In a third step S3 of the method, the support wall 26 of the degassing vent assembly 18 is mechanically connected to the enclosure 14 such that the support wall 26 covers the vent 16 of the enclosure 14. It is noted that the enclosure 14 comprises the vent 16 for discharging gas and/or particles in case of the thermal event.

This is done using the clipping mechanism 20 as explained above.

It is noted that it is also possible to change the order of steps S2 and S3 or to execute steps S2 and S3 in parallel.

Subsequently, in a fourth step S4, the protection sheet 24 and the holding member 30 are mechanically connected to the enclosure 14 such that the protection sheet 24 covers the vent 16 of the enclosure 14. Additionally, the protection sheet 24 covers the openings 28 of the support wall 26.

In the fourth step S4, the same mounting elements 32, i.e. the bolts 22, are used for mechanically connecting the protection sheet 24 and the holding member 30 and for mechanically connecting the protection sheet 24 and the holding member 30 to the enclosure 14.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery pack
- 14: enclosure
- 16: vent in enclosure
- 18: degassing vent assembly
- 20: clipping mechanism
- 22: bolt
- 24: protection sheet
- 26: support wall
- 28: opening in support wall
- 30: holding member
- 32: mounting element
- 34: through hole
- 36: internal pressure
- 38: external pressure
- 40: slightly bent state
- 42: ruptured state

- S1: first step
- S2: second step
- S3: third step
- S4: fourth step

## Claims

1. A degassing vent assembly (18) for a battery pack (12) of a vehicle (10), the degassing vent assembly (18) comprising:
- a protection sheet (24) configured for covering a vent (16) of the battery pack (12),
- a support wall (26) comprising at least one opening (28), wherein the protection sheet (24) covers the at least one opening (28),
- a holding member (30) configured for holding the protection sheet (24) against the support wall (26), wherein the holding member (30) and the protection sheet (24) are arranged on opposite sides of the protection sheet (24).

2. The degassing vent assembly (18) of claim 1, wherein the protection sheet (24) is a membrane or a foil.

3. The degassing vent assembly (18) of any one of the preceding claims, wherein the protection sheet (24) is impermeable for liquids.

4. The degassing vent assembly (18) of any one of the preceding claims, wherein the protection sheet (24) is gas-permeable.

5. The degassing vent assembly (18) of any one of the preceding claims, wherein the support wall (26) comprises a plurality of openings (28), and wherein the protection sheet (24) covers the plurality of openings (28).

6. The degassing vent assembly (18) of any one of the preceding claims, wherein the support wall (26) and/or the holding member (30) comprise a metal material.

7. The degassing vent assembly (18) of any one of the preceding claims, wherein at least the protection sheet (24) and the holding member (30) are mechanically connected using at least one mounting element (32).

8. A battery pack (12) for a vehicle (10), the battery pack (12) comprising:
- an enclosure (14) for one or more battery cells, wherein the enclosure (14) comprises a vent (16) for discharging gas and/or particles in case of a thermal event, and
- a degassing vent assembly (18) according to any one of the preceding claims, wherein the degassing vent assembly (18) is arranged on the enclosure (14) such that the degassing vent assembly (18) covers the vent (16) of the enclosure (14).

9. The battery pack (12) of claim 8, wherein the degassing vent assembly (18) is mechanically connected to the enclosure (14) using a clipping mechanism (20), at least one screw and/or at least one bolt (22).

10. The battery pack (12) of claim 8 or 9, wherein the protection sheet (24) seals the vent (16) of the enclosure (14) in a liquid-tight manner.

11. The battery pack (12) of any one of claims 8 to 10, wherein the support wall (26) is arranged closer to the enclosure (14) than the holding member (30).

12. A method for mounting a degassing vent assembly (18) of any one of claims 1 to 7 on a battery pack (12) for a vehicle (10), the method comprising:
- providing an enclosure (14) of the battery pack (12), wherein the enclosure (14) is for one or more battery cells, and wherein the enclosure (14) comprises a vent (16) for discharging gas and/or particles in case of a thermal event, and
- mechanically connecting the support wall (26) of the degassing vent assembly (18) to the enclosure (14) such that the support wall (26) covers the vent (16) of the enclosure (14), and subsequently mechanically connecting the protection sheet (24) and the holding member (30) to the enclosure (14) such that the protection sheet (24) covers the vent (16) of the enclosure (14).

13. The method of claim 12, further comprising mechanically connecting the protection sheet (24) and the holding member (30) before mechanically connecting the protection sheet (24) and the holding member (30) to the enclosure (14).

14. The method of claim 13, further comprising using the same at least one mounting element (32) for mechanically connecting the protection sheet (24) and the holding member (30) and for mechanically connecting the protection sheet (24) and the holding member (30) to the enclosure (14).

15. A vehicle (10) comprising a degassing vent assembly (18) according to any one of claims 1 to 7 and/or a battery pack (12) according to any one of claims 8 to 11.

## Amended claims

### Amended claims in accordance with Rule 137(2) EPC.

1. A degassing vent assembly (18) for a battery pack (12) of a vehicle (10), the degassing vent assembly (18) comprising:
- a protection sheet (24) configured for covering a vent (16) of the battery pack (12),
- a support wall (26) comprising at least one opening (28), wherein the protection sheet (24) covers the at least one opening (28),
- a holding member (30) configured for holding the protection sheet (24) against the support wall (26), wherein the holding member (30) and the support wall (26) are arranged on opposite sides of the protection sheet (24).

2. The degassing vent assembly (18) of claim 1, wherein the protection sheet (24) is a membrane or a foil.

3. The degassing vent assembly (18) of any one of the preceding claims, wherein the protection sheet (24) is impermeable for liquids.

4. The degassing vent assembly (18) of any one of the preceding claims, wherein the protection sheet (24) is gas-permeable.

5. The degassing vent assembly (18) of any one of the preceding claims, wherein the support wall (26) comprises a plurality of openings (28), and wherein the protection sheet (24) covers the plurality of openings (28).

6. The degassing vent assembly (18) of any one of the preceding claims, wherein the support wall (26) and/or the holding member (30) comprise a metal material.

7. The degassing vent assembly (18) of any one of the preceding claims, wherein at least the protection sheet (24) and the holding member (30) are mechanically connected using at least one mounting element (32).

8. A battery pack (12) for a vehicle (10), the battery pack (12) comprising:
- an enclosure (14) for one or more battery cells, wherein the enclosure (14) comprises a vent (16) for discharging gas and/or particles in case of a thermal event, and
- a degassing vent assembly (18) according to any one of the preceding claims, wherein the degassing vent assembly (18) is arranged on the enclosure (14) such that the degassing vent assembly (18) covers the vent (16) of the enclosure (14).

9. The battery pack (12) of claim 8, wherein the degassing vent assembly (18) is mechanically connected to the enclosure (14) using a clipping mechanism (20), at least one screw and/or at least one bolt (22).

10. The battery pack (12) of claim 8 or 9, wherein the protection sheet (24) seals the vent (16) of the enclosure (14) in a liquid-tight manner.

11. The battery pack (12) of any one of claims 8 to 10, wherein the support wall (26) is arranged closer to the enclosure (14) than the holding member (30).

12. A method for mounting a degassing vent assembly (18) of any one of claims 1 to 7 on a battery pack (12) for a vehicle (10), the method comprising:
- providing an enclosure (14) of the battery pack (12), wherein the enclosure (14) is for one or more battery cells, and wherein the enclosure (14) comprises a vent (16) for discharging gas and/or particles in case of a thermal event, and
- mechanically connecting the support wall (26) of the degassing vent assembly (18) to the enclosure (14) such that the support wall (26) covers the vent (16) of the enclosure (14), and subsequently mechanically connecting the protection sheet (24) and the holding member (30) to the enclosure (14) such that the protection sheet (24) covers the vent (16) of the enclosure (14).

13. The method of claim 12, further comprising mechanically connecting the protection sheet (24) and the holding member (30) before mechanically connecting the protection sheet (24) and the holding member (30) to the enclosure (14).

14. The method of claim 13, further comprising using the same at least one mounting element (32) for mechanically connecting the protection sheet (24) and the holding member (30) and for mechanically connecting the protection sheet (24) and the holding member (30) to the enclosure (14).

15. A vehicle (10) comprising a degassing vent assembly (18) according to any one of claims 1 to 7 and/or a battery pack (12) according to any one of claims 8 to 11.
